# EUROPÄISCHE PATENTSCHRIFT

(11) **EP 0 757 960 B1**
(45) Veröffentlichungstag und Bekanntmachung des Hinweises auf die Patenterteilung: **02.02.2000**
(21) Anmeldenummer: 96112069.8
(22) Anmeldetag: 26.07.1996
(51) Int. Cl.: B65G 47/31

(54) **Vorrichtung zum geordneten Transport von Packungen**
Apparatus for ordered transport of packages
Dispositif pour le transport ordonné d'emballages

(30) Priorität: 08.08.1995 DE 19529139
(43) Veröffentlichungstag der Anmeldung: 12.02.1997
(73) Patentinhaber: Focke & Co. (GmbH & Co.), 27283 Verden (DE)
(72) Erfinder: Focke, Heinz, 27283 Verden (DE); Roesler, Burkard, 27337 Blender (DE)
(74) Vertreter: Bolte, Erich, Dipl.-Ing.

(56) Entgegenhaltungen:
- EP-A- 0 519 401
- DE-A- 2 204 635
- FR-A- 2 237 820
- US-A- 1 871 996
- US-A- 3 827 545
- US-A- 4 360 098
- US-A- 4 364 466
- US-A- 4 640 408
- US-A- 5 097 939

## Beschreibung

Die Erfindung betrifft eine Vorrichtung zur Übergabe von in unregelmäßigen Abständen auf einem Zuförderer ankommenden Packungen an einen mit höherer Geschwindigkeit angetriebenen Abförderer, in dessen Bereich die Packungen mit übereinstimmenden Abständen voneinander transportierbar sind, wobei die Packungen vom Zuförderer an einen einen oberen Gurt und einen unteren Gurt aufweisenden Stauförderer zur Bildung einer Staugruppe der Packungen überführbar sind und wobei weiterhin zwischen dem Stauförderer und dem Abförderer ein Zwischenförderer angeordnet ist, der mit höherer Geschwindigkeit als der Stauförderer antreibbar ist.

Eine derartige Vorrichtung ist in der US 4 360 098 dargestellt und beschrieben. Die ankommenden Gegenstände, nämlich Rollen, werden von dem Stauförderer paarweise übergeben an einen ersten Zwischenförderer, der aus einem oberen und einem unteren Gurt besteht. Dieser erste Zwischenförderer ist ungleichförmig angetrieben, nämlich mit geringerer Geschwindigkeit bei Aufnahme von Gegenständen und mit erhöhter Geschwindigkeit bei Übergabe an einen nachfolgenden Zwischenförderer. Dieser besteht lediglich aus einem unteren Gurt, auf dessen Fördertrum die Rollen aufliegen. Der zweite Zwischenförderer beschleunigt die Rollen und führt sie einem Abförderer zu. Zur Überbrückung eines Abstands ist zwischen dem Zwischenförderer und dem Abförderer eine angetriebene Förderwalze angeordnet.

Wegen der größeren Anzahl von unterschiedlich angetriebenen Förderern ist diese bekannte Vorrichtung nicht optimal an die Arbeitsweise der Verpackungsmaschine, nämlich an den Maschinentakt anpaßbar.

Der Erfindung liegt die Aufgabe zugrunde, eine Vorrichtung der eingangs genannten Art dahingehend weiterzuentwickeln, daß auch empfindliche Packungen mit geringem Eigengewicht zuverlässig und in genauen Positionen bei hoher Geschwindigkeit transportiert sowie von einem Förderer an einen nachfolgenden Förderer übergeben werden.

Zur Lösung dieser Aufgabe ist die erfindungsgemäße Vorrichtung durch folgende Merkmale gekennzeichnet:
a) die Packungen sind durch den Zwischenförderer auf die Geschwindigkeit des Abförderers beschleunigbar,
b) der Zwischenförderer besteht aus Endlosförderern, die seitlich neben der Bewegungsbahn der Packungen angeordnet sind, derart, daß diese im Bereich von seitwärts gerichteten Flächen durch Fördertrume des Zwischenförderers erfaßbar sind,
c) der Achsabstand (1) von Umlenkrädern des Stauförderers von Umlenkrollen der Endlosförderer des Zwischenförderers entspricht der Abmessung einer Packung in Förderrichtung,
d) der Zwischenförderer erstreckt sich bis in den Bereich des Abförderers, derart, daß die Packungen von dem Zwischenförderer dem Abförderer zuführbar sind,
e) der Abförderer ist ein Gurtförderer mit Mitnehmern zum Erfassen der auf einem Obertrum des Abförderers abgelegten Packungen.

Die erfindungsgemäße Vorrichtung ermöglicht eine exakte, auf den Maschinentakt abgestellte Bewegung der Packungen unter Schaffung eines konstanten Abstands der in Dichtlage ankommenden Packungen.

Unteransprüche beziehen sich auf vorteilhafte Ausführungen der erfindungsgemäßen Vorrichtung.

Ein Ausführungsbeispiel der erfindungsgemäßen Vorrichtung wird nachfolgend anhand der Zeichnungen näher erläutert. Es zeigt:
- Fig. 1: einen Abschnitt einer Fördervorrichtung in schematischem Grundriß,
- Fig. 2: die Fördervorrichtung gemäß Fig. 1 in Seitenansicht,

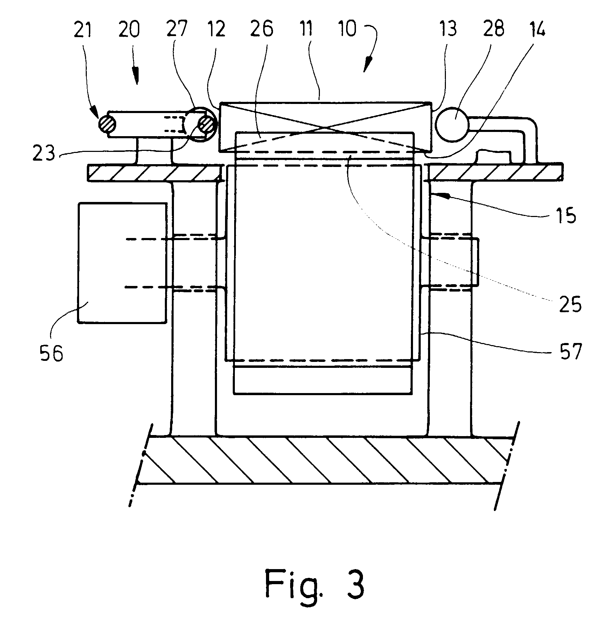

- Fig. 3: einen Querschnitt durch die Vorrichtung in der Schnittebene III-III der Fig. 2 bei vergrößertem Maßstab,

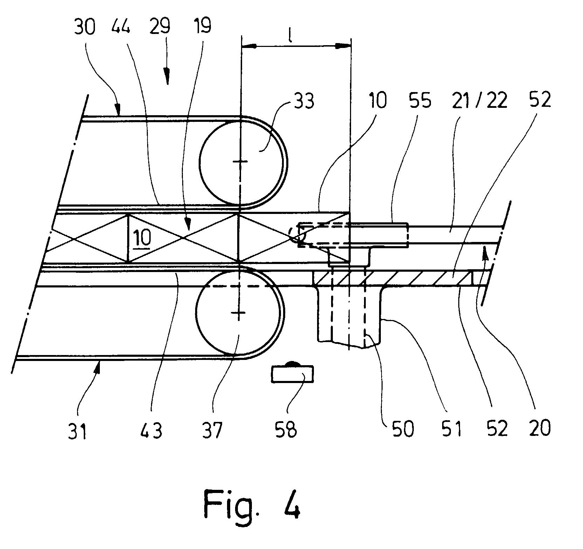

- Fig. 4: eine Einzelheit der Fördervorrichtung in Seitenansicht, ebenfalls in vergrößertem Maßstab.

Das vorliegende Ausführungsbeispiel befaßt sich mit der Handhabung von quaderförmigen Packungen 10. Es handelt sich dabei um Weichpackungen, nämlich in eine Folie eingehüllte Stapel von gefalteten Papiertaschentüchern. Diese werden so transportiert, daß sie mit ihrer Längserstreckung quer zur Förderrichtung weisen. Eine Vorderseite 11 ist nach oben gerichtet. An dieser soll im vorliegenden Falle ein Klebeetikett angebracht werden durch einen nicht gezeigten Etikettierer. Stirnflächen 12, 13 der Packung sind seitwärts gerichtet. Eine Rückseite 14 weist nach unten. Zum Anbringen der Klebeetiketten - oder aus anderen Gründen - sollen die Packungen 10 im Bereich eines Abförderers 15 mit gleichen, exakten Abständen voneinander kontinuierlich transportiert werden.

Die Packungen 10 werden auf einem Zuförderer 16 angeliefert. Dieser ist als Bandförderer ausgebildet. Die Packungen 10 liegen in der beschriebenen Relativlage auf einem oberen Trum 17 des Zuförderers 16.

Die Packungen 10 bilden einen Packungsstrang 18. Die Packungen 10 können innerhalb des Packungsstrangs 18 in Dichtlage positioniert sein - wie gezeigt - oder auch mit Abständen voneinander. Eine dem Abförderer 15 zugekehrte Anzahl von Packungen 10 ist in jedem Falle in Dichtlage angeordnet, bildet nämlich eine Staugruppe 19. Von dieser werden die Packungen 10 einzeln nacheinander abgegeben und in eine Position mit exakten Abständen voneinander gebracht. So werden dann die Packungen 10 an den Abförderer 15 übergeben. Die jeweils vordere Packung 10 der Staugruppe 19 wird in exakter Abstimmung mit dem Maschinentakt, also in vorgegebenen zeitlichen oder räumlichen Abständen freigegeben zur Weitergabe an den Abförderer 15.

Die von der Staugruppe 19 jeweils abgesonderte vordere Pakkung 10 wird von einem Zwischenförderer 20 übernommen und beim vorliegenden Ausführungsbeispiel von diesem unmittelbar dem Abförderer 15 zugeführt. Der Zwischenförderer 20 ist ein besonderes Organ. Es bewirkt eine Beschleunigung der Packung 10 auf die Fördergeschwindigkeit des Abförderers 15, so daß dieser die betreffende Packung 10 positionsgenau weitertransportieren kann.

Der Zwischenförderer 20 besteht aus endlosen Förderorganen, im vorliegenden Fall aus zwei seitlichen Fördergurten in Gestalt von Rundriemen 21, 22. Die endlosen Rundriemen 21, 22 sind in horizontaler Ebene bewegbar, derart, daß Fördertrums 23, 24 an seitwärts gerichteten Flächen, nämlich an den Stirnflächen 12, 13, der Packungen 10 anliegen. Der Zwischenförderer 20 ist so positioniert, daß die Packungen 10 einzeln unmittelbar nach Verlassen der Staugruppe 19 aufgenommen, bis in den Bereich des Abförderers 15 transportiert und auf einem Obertrum 25 desselben abgelegt werden.

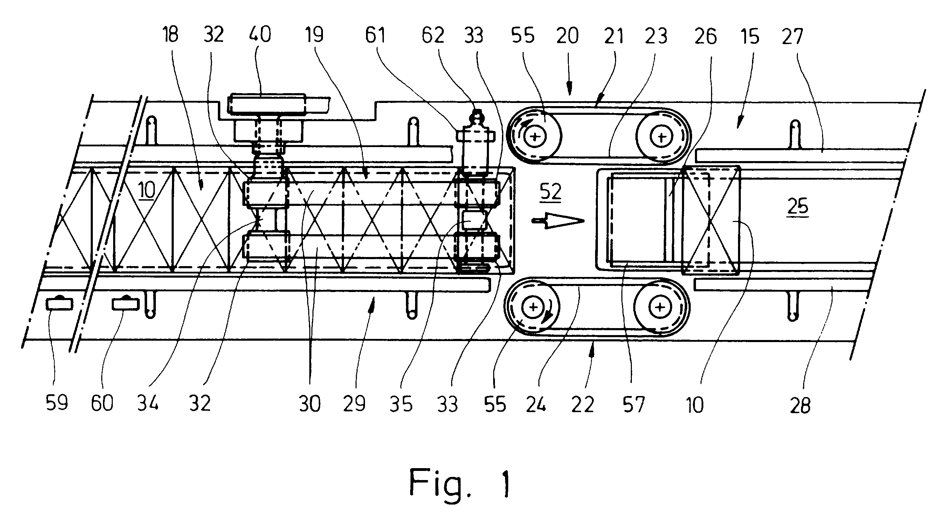

Der Abförderer 15 weist zur positionsgenauen Förderung der Packungen 10 Mitnehmer 26 auf, die je eine Packung 10 an der Rückseite erfassen. Die Mitnehmer 26 haben Abstände voneinander, die dem Arbeitstakt des Etikettierers entsprechen. Die vom Zwischenförderer 20 angelieferten Packungen 10 werden in dem Bereich des Obertrums 25 gefördert, bevor ein Mitnehmer 26 in diesem Bereich erscheint. Die Packungen 10 werden demnach in Förderrichtung vor dem zugeordneten Mitnehmer 26 auf dem Obertrum 25 abgelegt (Fig. 1). Damit die Packungen 10 während des Transports durch den Abförderer 15 in Anlage am Mitnehmer 26 gehalten werden, sind beidseits der Förderbahn Schienen 27, 28 angeordnet, die im vorliegenden Falle aus Rundmaterial bestehen, also stangenförmig ausgebildet sind. Die Packungen 10 liegen mit ihren Stirnflächen 12, 13 an den Schienen 27, 28 an, so daß eine leichte Reibung erzeugt wird, die die Position der Packungen 10 auf dem Abförderer 15 sichert.

In besonderer Weise wird die Staugruppe 19 erzeugt und hinsichtlich der Abgabe der Packungen 10 an den Zwischenförderer 20 gesteuert. Der Staugruppe 19 aus im vorliegenden Falle fünf Packungen 10 ist ein Stauförderer 29 zugeordnet. Dieser ist in dem in Transportrichtung vornliegenden Endbereich des Packungsstrangs 18 wirksam, und zwar im Sinne eines den Bewegungsablauf der Packungen 10 regulierenden Bremsorgans.

Der Stauförderer 29 besteht im vorliegenden Falle aus an einander gegenüberliegenden Seiten des Packungsstrangs 18 laufenden Endlosförderern, nämlich Gurten 30, 31. Im vorliegenden Falle liegen die Gurte 30, 31 des Stauförderers 29 an den großflächigen Seiten der Packungen 10 an, nämlich an der nach oben gerichteten Vorderseite 11 und der nach unten weisenden Rückseite 14. Der Stauförderer 29 besteht aus jeweils zwei Paaren von parallel laufenden Gurten 30 einerseits und 31 andererseits. Die beiden Gurte 30 sind mit Umlenkrädern 32 und 33 jeweils auf einer gemeinsamen, quergerichteten Welle 34 bzw. 35 gelagert. Entsprechend sind die Gurte 31 an der Unterseite der Staugruppe 19 ausgebildet und gelagert, nämlich mit Umlenkrädern 36, 37. Die Gurte 30, 31 des Stauförderers 29 sind gemeinsam angetrieben, hier durch einen Antriebsriemen 38, zum Beispiel Zahnriemen, Kette oder dergleichen. Dieser wird von einem Antriebsrad 39 unterhalb der Bewegungsbahn der Packungen 10 angetrieben, und zwar derart, daß durch Umschlingung jeweils den Paaren der Gurte 30, 31 zugeordnete Übertragungsräder 40, 41 angetrieben sind. Dieser Antrieb für die Gurte 30, 31 ist Teil eines gemeinsamen Antriebs 42 für Zwischenförderer 20 und Stauförderer 29.

Die Gurte 30, 31 des Stauförderers 29 sind in Förderrichtung der Packungen 10 konvergierend positioniert. Im vorliegenden Falle ist ein Fördertrum 43 der unteren Gurte 31 horizontal gerichtet, während ein Fördertrum 44 der oberen Gurte 30 mit abwärts gerichteter Neigung in Förderrichtung positioniert ist. Die Gurte 30, 31 bilden mithin einen sich in Förderrichtung verjüngenden Spalt, in den der Packungsstrang 18 einläuft. Die Relativstellungen sind dabei so gewählt, daß auf der Eintrittsseite des Stauförderers 29, nämlich im Bereich der Umlenkräder 32 und 36, ein Abstand der Gurte 30, 31 bzw. der Fördertrume 43, 44 gegeben ist, der größer ist als die Höhe der Packungen 10. Der Abstand verringert sich in Förderrichtung soweit, daß die Fördertrume 43, 44 schließlich an Vorderseite 11 und Rückseite 14 der Packungen 10 anliegen und bei Bewegungsdifferenzen eine Rückhaltekraft auf die Packungen 10 ausüben. Bei einem vorteilhaften Ausführungsbeispiel sind die Abstände so gewählt, daß diese im Bereich der Umlenkräder 32 und 36 etwa 30 mm und im Bereich der Umlenkräder 33 und 37 etwa 23 mm betragen bei einer Höhe der Packungen von etwa 23 mm.

Die beschriebenen kontinuierlich laufenden Förderorgane für die Packungen 10 sind hinsichtlich der Fördergeschwindigkeiten aufeinander und auf den Maschinentakt abgestimmt. Dieser kann gemäß einem Beispiel 700 Takte pro Minute betragen. Bei einer Abmessung der Packungen von 56 mm in Förderrichtung (Breite der querliegenden Packungen 10) beträgt die Fördergeschwindigkeit des Zuförderers 16 zum Beispiel 86 mm je Takt. Der Stauförderer 29 ist auf eine geringere Geschwindigkeit eingestellt, insbesondere zur Erzeugung der Staugruppe 19, im vorliegenden Falle 56 mm je Takt. Der anschließende Zwischenförderer 20 bewirkt den erwünschten Abstand der Packungen 10 voneinander und wird deshalb mit höherer Geschwindigkeit angetrieben, nämlich mit 160 mm je Takt. Die gleiche Fördergeschwindigkeit ist für den Abförderer 19 vorgesehen. Die Geschwindigkeit des Stauförderers 29 ist demnach für diesen Anwendungsfall auf die Breite bzw. Abmessung der Pakkung in Förderrichtung ausgerichtet, so daß je Takt eine Packung durch den Stauförderer 29 an den Zwischenförderer 20 übergeben wird.

Die Abstimmung der Förderbewegungen von Zwischenförderer 20 und Stauförderer 29 wird durch den gemeinsamen Antrieb 42 begünstigt. Ein gemeinsamer Antriebsmotor, nämlich ein Servomotor 45, überträgt den Antrieb auf ein zentrales Antriebsorgan, und zwar auf eine Antriebsscheibe 46. Diese sitzt auf einer quergerichteten, horizontalen Hauptwelle 47, auf der auch das Antriebsrad 39 für die Übertragung des Antriebs auf den Stauförderer 29 gelagert ist.

Die beidseitig zur Förderbahn der Packungen 10 angeordneten Rundriemen 21, 22 des Zwischenförderers 20 werden durch diesen gemeinsamen Antrieb 42 je gesondert angetrieben. Auf der Hauptwelle 47 befinden sich zu beiden Seiten der Bewegungsbahn der Packungen 10 Antriebsräder 48 für jeden Rundriemen 21, 22. Deren Antriebsbewegung wird über Antriebsgurte 49 - im vorliegenden Falle mit Rundprofil - auf eine aufrechte Antriebswelle 50 für jeden Rundriemen 21, 22 übertragen. Die aufrechten Antriebswellen 50 sind in einem aufrechten Lager 51 gehalten, welches hier mit einer Förderplatte 52 für die Packungen 10 im Bereich des Zwischenförderers 20 verbunden ist.

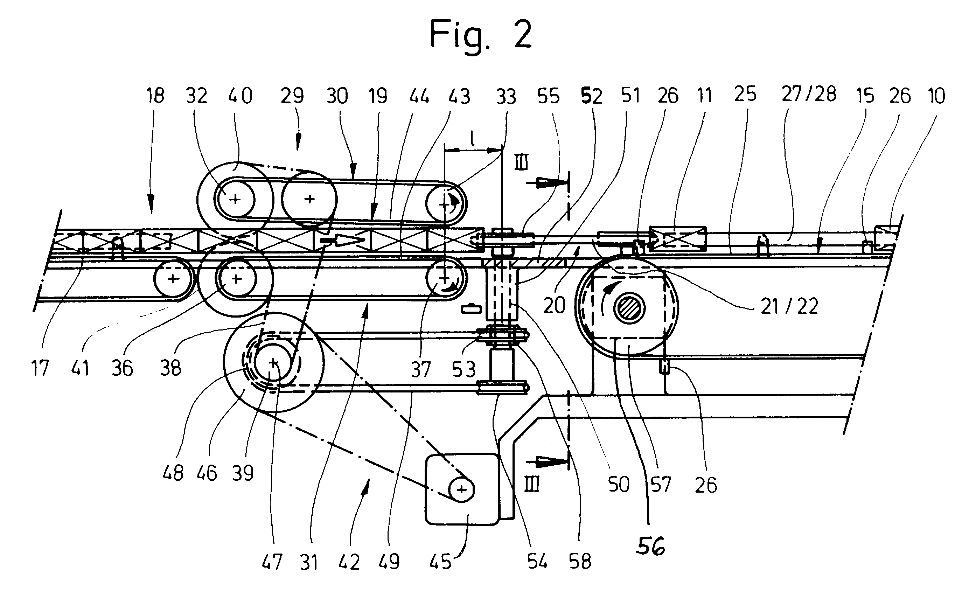

Auf der Antriebswelle 50 sind zur Führung der endlosen Antriebsgurte 49 jeweils zwei Umlenkräder 53 und 54 übereinander gelagert. Diese dienen der Führung der endlosen Antriebsgurte 49 und der Übertragung des Antriebs auf die Antriebswelle 50 und damit auf eine Umlenkrolle 55 des Zwischenförderers 20 bzw. der Rundriemen 21, 22. Jede Seite, also jeder Rundriemen 21, 22 des Zwischenförderers 20, wird durch einen Antrieb gemäß Fig. 2 bewegt, wobei der Servomotor 45 für beide Seiten gemeinsam wirkt.

Dem Abförderer 15 ist ein gesonderter Antrieb (nicht gezeigt) zugeordnet. Der Antrieb wird von der Maschine aus gesteuert bzw. nach Maßgabe des Maschinentaktes. Die genaue Relativstellung des Abförderers bzw. der Mitnehmer 26 auf diesem wird ständig festgestellt und in Überstimmung gebracht mit den zugeförderten Packungen 10. Zu diesem Zweck ist ein Meßorgan, nämlich ein Winkelschrittgeber bzw. ein sogenannter Resolver 56 im Bereich einer dem Zwischenförderer 20 zugekehrten Umlenkwalze 57 des Abförderers 16 angeordnet. Der Resolver 56 ermittelt zu jeder Zeit die Stellung des Fördergurts des Abförderers 15 und damit die Stellung des nächstfolgenden Mitnehmers 26. Die Fördergeschwindigkeit des Zwischenförderers 20 und damit auch des Stauförderers 29 werden hierauf abgestimmt, so daß eine zugeführte Packung 10 im Bereich des Abförderers 15 unmittelbar nach der Übergabe durch einen Mitnehmer 26 erfaßt wird.

Zur exakten Steuerung und Überwachung der Relativstellung der Packungen 10 sind Überwachungsorgane, nämlich Sensoren, vorgesehen. Ein solcher Sensor 58 befindet sich im Bereich zwischen Stauförderer 29 und Zwischenförderer 20. Die Abstände dieser Förderer voneinander, nämlich die Achsabstände der Umlenkräder 33 und 37 einerseits von der Umlenkrolle 55 der Rundriemen 21, 22 andererseits entspricht der Breite einer Packung 10 bzw. deren Abmessung in Förderrichtung ("1" in Fig. 2). Mittig zwischen diesen Achsen ist der Sensor 58 unterhalb der Bewegungsbahn der Packungen 10 positioniert, und zwar derart, daß die Packungen 10 beim Verlassen des Stauförderers 29 erfaßt werden können.

Der Sensor 58 hat eine Doppelfunktion. Beim Anlaufen der Vorrichtung muß die erste, in Transportrichtung vornliegende Packung 10 für die Abstimmung auf die nachfolgenden Förderer exakt positioniert werden. Der Sensor 58 bildet hier einen Referenzpunkt für die Positionierung der vornliegenden Pakkung 10 der Staugruppe 19. Gleiches gilt im Falle einer Störung bei Wiederanfahren der Vorrichtung. Dabei wird so vorgegangen, daß bei (Wieder-)Inbetriebnahme die Packungen 10 im Bereich des Stauförderers 29 durch diesen zunächst in entgegengesetzter Richtung gefördert werden, so daß mit Sicherheit eine Staugruppe 19 aus dicht aneinanderliegenden Packungen 10 geschaffen wird. Sodann wird diese durch den Stauförderer 29 langsam in Transportrichtung gefördert bis zum Erreichen des Sensors 58. Damit ist die exakte Position der Staugruppe 19 für das Anlaufen der Vorrichtung geschaffen.

Beim Anfahren der Vorrichtung wird eine weitere Besonderheit verwirklicht: Die Fördergeschwindigkeit wird langsam hochgefahren, und zwar unter Inanspruchnahme von zwei Maschinentakten. Innerhalb dieser beiden Maschinentakte erreichen die zusammenwirkenden Förderer die Betriebsgeschwindigkeit. Dies bedeutet, daß erst mit dem zweiten Maschinentakt eine Packung 10 den Abförderer 15 erreicht.

Weitere Sensoren 59 und 60 befinden sich im Bereich des Zuförderers 16. Diese überwachen den Packungsstrang 18 hinsichtlich einer minimalen oder maximalen Belegung des Zuförderers 16 mit Packungen 10. In beiden Fällen extremer Belegung wird die Vorrichtung abgeschaltet.

Die oberen und unteren Gurte 30 und 31 des Stauförderers 29 sind relativ zueinander bewegbar, so daß die Abstände veränderbar sind. Im vorliegenden Falle ist der untere Gurt 31 feststehend und der obere Gurt 30 schwenkbar gelagert, und zwar um die Achse der Umlenkräder 32. Die gegenüberliegenden Umlenkräder 33 sind demnach auf- und abbewegbar, und zwar mit der gemeinsamen Welle 35, auf der die Umlenkräder 33 gelagert sind. Die untere Endstellung der Umlenkräder 33 bzw. der Welle 35 ist durch einen festen Anschlag 61 vorgegeben. Auf diesem liegt die Welle 35 und bestimmt somit den Abstand der Umlenkräder 33 einerseits und 37 andererseits voneinander. Im vorliegenden Falle wird die Welle 35 durch ein elastisches Organ, nämlich durch eine Zugfeder 62 gegen den Anschlag 61 gedrückt. Gegen die Belastung der Zugfeder 62 kann die Welle 35 mit den Umlenkrädern 37 angehoben werden.

Die miteinander wirkenden Förderer ermöglichen eine exakte Handhabung der Packungen 10 ohne Veränderung der Förderebene derselben. Diese werden in einer durchgehenden horizontalen Förderebene dem Abförderer 15 zugeführt.

## Patentansprüche

1. Vorrichtung zur Übergabe von in unregelmäßigen Abständen auf einem Zuförderer (16) ankommenden Packungen (10) an einen mit höherer Geschwindigkeit angetriebenen Abförderer (15), in dessen Bereich die Packungen (10) mit übereinstimmenden Abständen voneinander transportierbar sind, wobei die Packungen (10) vom Zuförderer (16) an einen einen oberen Gurt (30) und einen unteren Gurt (31) aufweisenden Stauförderer (29) zur Bildung einer Staugruppe (19) der Packungen (10) überführbar sind und wobei weiterhin zwischen dem Stauförderer (29) und dem Abförderer (15) ein Zwischenförderer (20) angeordnet ist, der mit höherer Geschwindigkeit als der Stauförderer (29) antreibbar ist, **gekennzeichnet durch** folgende Merkmale:
a) die Packungen (10) sind durch den Zwischenförderer (20) auf die Geschwindigkeit des Abförderers (15) beschleunigbar,
b) der Zwischenförderer (20) besteht aus Endlosförderern (21, 22), die seitlich neben der Bewegungsbahn der Packungen (10) angeordnet sind, derart, daß diese im Bereich von seitwärts gerichteten Flächen durch Fördertrume (23, 24) des Zwischenförderers (20) erfaßbar sind,
c) der Achsabstand (1) von Umlenkrädern (33, 37) des Stauförderers (29) von Umlenkrollen (55) der Endlosförderer (21, 22) des Zwischenförderers (20) entspricht der Abmessung einer Packung (10) in Förderrichtung,
d) der Zwischenförderer (20) erstreckt sich bis in den Bereich des Abförderers (15), derart, daß die Packungen (10) von dem Zwischenförderer (20) dem Abförderer (15) zuführbar sind,
e) der Abförderer (15) ist ein Gurtförderer mit Mitnehmern (26) zum Erfassen der auf einem Obertrum (25) des Abförderers (15) abgelegten Packungen (10).

2. Vorrichtung nach Anspruch 1, **dadurch gekennzeichnet,** daß die Endlosförderer (21, 22) des Zwischenförderers (20) die Packungen (10) im Bereich von seitwärts gerichteten Stirnflächen (12, 13) erfassen.

3. Vorrichtung nach Anspruch 1 oder 2, **dadurch gekennzeichnet,** daß die Endlosförderer (21, 22) des Zwischenförderers als Rundriemen ausgebildet sind.

4. Vorrichtung nach Anspruch 1 oder einem der weiteren Ansprüche, **dadurch gekennzeichnet,** daß der Stauförderer (29) einen in Förderrichtung im Querschnitt abnehmenden Raum zur Aufnahme der Packungen (10) bildet, insbesondere durch in Förderrichtung konvergierende Relativstellung der Gurte (30, 31), wobei vorzugsweise an der Eintrittsseite des Stauförderers (29) die Abmessungen bzw. Höhe des Raums zwischen den Gurten (30, 31) größer ist als die Höhe der Packungen (10) und austrittsseitig der Abstand etwa der Höhe der Packungen (10) entspricht.

5. Vorrichtung nach Anspruch 1 oder einem der weiteren Ansprüche, **dadurch gekennzeichnet**, daß der Antrieb des Zwischenförderers (20) und des Stauförderers (29) aufeinander abgestimmt sind, derart, daß der Stauförderer (29) je Maschinentakt eine Packung (10) freigibt und der Zwischenförderer (20) eine um mehr als das Doppelte höhere Fördergeschwindigkeit als der Stauförderer (29) aufweist.

6. Vorrichtung nach Anspruch 1 oder einem der weiteren Ansprüche, **dadurch gekennzeichnet,** daß der Zwischenförderer (20) und der Stauförderer (29) durch einen gemeinsamen Antrieb angetrieben sind, insbesondere durch einen gemeinsamen Servomotor (45) über Getriebe (46, 50, 53; 38, 40) mit unterschiedlicher Übersetzung.

7. Vorrichtung nach Anspruch 1 oder einem der weiteren Ansprüche, **dadurch gekennzeichnet,** daß die Förderbewegung des eigenständig angetriebenen Abförderers (15) ständig überwacht ist, insbesondere im Bereich einer dem Zwischenförderer (20) zugekehrten Umlenkwalze (57) des Abförderers (15), wobei die Überwachung des Abförderers (15) die Relativstellung von am Abförderer (15) angebrachten Mitnehmern (26) für die Packungen (10) erfaßt, derart, daß eine dem Abförderer (15) zugeführte Packung (10) unmittelbar danach durch einen Mitnehmer (26) im Bereich eines Obertrums (25) erfaßbar ist.

8. Vorrichtung nach Anspruch 7 oder einem der weiteren Ansprüche, **dadurch gekennzeichnet,** daß im Bereich der dem Zwischenförderer (20) zugekehrten Umlenkwalze (57) des Abförderers (15) ein Meßorgan zur Feststellung der Position des Abförderers (15) angeordnet ist, insbesondere ein Winkelschrittgeber bzw. ein sogenannter Resolver (56).

9. Vorrichtung nach Anspruch 1 oder einem der weiteren Ansprüche, **dadurch gekennzeichnet**, daß zwischen Stauförderer (29) und Zwischenförderer (20) ein Überwachungsorgan für die Packungen (10) angeordnet ist, insbesondere ein Sensor (58) vorzugsweise mittig zwischen Stauförderer (29) und Zwischenförderer (20), wobei der Sensor (58) die Position einer vorderen Packung (10) bei Inbetriebnahme der Vorrichtung überwacht.

## Claims

1. Apparatus for transferring packs (10), which arrive at irregular intervals on a feed conveyor (16), to a removal conveyor (15) which is driven at a higher speed and in the region of which the packs (10) can be transported at corresponding spacings from one another, it being the case that the packs (10) can be transferred from the feed conveyor (16) to an accumulating conveyor (29), having a top belt (30) and a bottom belt (31), for the purpose of forming an accumulated group (19) of the packs (10), and it being the case furthermore that arranged between the accumulating conveyor (29) and the removal conveyor (15) is an intermediate conveyor (20) which can be driven at a higher speed than the accumulating conveyor (29), characterized by the following features:
a) the packs (10) can be accelerated by the intermediate conveyor (20) to the speed of the removal conveyor (15),
b) the intermediate conveyor (20) comprises endless conveyors (21, 22) which are arranged laterally next to the movement path of the packs (10), such that the latter can be gripped in the region of sideways directed surfaces by conveying strands (23, 24) of the intermediate conveyor (20),
c) the distance between the axes (1) of deflection wheels (33, 37) of the accumulating conveyor (29) and deflection rollers (55) of the endless conveyors (21, 22) of the intermediate conveyor (20) corresponds to the dimension of a pack (10) in the conveying direction,
d) the intermediate conveyor (20) extends into the region of the removal conveyor (15) such that the packs (10) can be fed to the removal conveyor (15) from the intermediate conveyor (20),
e) the removal conveyor (15) is a belt conveyor with carry-along members (26) for gripping the packs (10) deposited on a top strand (25) of the removal conveyor (15).

2. Apparatus according to Claim 1, characterized in that the endless conveyors (21, 22) of the intermediate conveyor (20) grip the packs (10) in the region of sideways directed end surfaces (12, 13).

3. Apparatus according to Claim 1 or 2, characterized in that the endless conveyors (21, 22) of the intermediate conveyor are designed as round belts.

4. Apparatus according to Claim 1 or one of the further claims, characterized in that the accumulating conveyor (29) forms a space which decreases in cross-section in the conveying direction and is intended for receiving the packs (10), in particular by the belts (30, 31) being positioned relative to one another such that they converge in the conveying direction, the dimensions or height of the space between the belts (30, 31) preferably being greater than the height of the packs (10) on the inlet side of the accumulating conveyor (29) and the distance preferably corresponding approximately to the height of the packs (10) on the outlet side.

5. Apparatus according to Claim 1 or one of the further claims, characterized in that the drives of the intermediate conveyor (20) and of the accumulating conveyor (29) are coordinated with one another, such that the accumulating conveyor (29) releases one pack (10) per machine cycle and the intermediate conveyor (20) has a conveying speed which is more than double that of the accumulating conveyor (29).

6. Apparatus according to Claim 1 or one of the further claims, characterized in that the intermediate conveyor (20) and the accumulating conveyor (29) are driven by a common drive, in particular by a common servomotor (45) via gear mechanisms (46, 50, 53; 38, 40) with different transmission ratios.

7. Apparatus according to Claim 1 or one of the further claims, characterized in that the conveying movement of the independently driven removal conveyor (15) is monitored constantly, in particular in the region of a deflection roller (57) which belongs to said removal conveyor (15) and is directed towards the intermediate conveyor (20), the monitoring of the removal conveyor (15) detecting the relative position of carry-along members (26) which are fitted on the removal conveyor (15) and are intended for the packs (10), such that, immediately thereafter, a pack (10) which is fed to the removal conveyor (15) can be gripped by a carry-along member (26) in the region of an upper strand (25).

8. Apparatus according to Claim 7 or one of the further claims, characterized in that arranged in the region of the deflection roller (57) which belongs to the removal conveyor (15) and is directed towards the intermediate conveyor (20) is a measuring member for establishing the position of the removal conveyor (15), in particular an angular encoder or a so-called resolver (56).

9. Apparatus according to Claim 1 or one of the further claims, characterized in that a monitoring member for the packs (10), in particular a sensor (58), is arranged, preferably centrally, between the accumulating conveyor (29) and intermediate conveyor (20), the sensor (58) monitoring the position of a front pack (10) when the apparatus is started up.

## Revendications

1. Dispositif de transfert de paquets (10), qui arrivent à des distances irrégulières sur un transporteur d'amenée (16), à un transporteur d'évacuation (15) mû à une vitesse plus élevée, dans la zone duquel les paquets (10) peuvent être transportés à des distances concordantes les uns des autres, les paquets (10) pouvant être transférés du transporteur d'amenée (16) à un transporteur de retenue (29), présentant une courroie supérieure (30) et une courroie inférieure (31), pour la formation d'un groupe de retenue (19) de paquets (10), et en outre, entre le transporteur de retenue (29) et le transporteur d'évacuation (15) étant placé un transporteur intermédiaire (20) qui peut être mû à plus grande vitesse que le transporteur de retenue (29), caractérisé par les caractéristiques suivantes :
a) les paquets (10) peuvent être accélérés par le transporteur intermédiaire (20) à la vitesse du transporteur d'évacuation (15),
b) le transporteur intermédiaire (20) est constitué de transporteurs sans fin (21, 22) qui sont placés sur le côté près de la trajectoire des paquets (10) de façon telle que ceux-ci puissent être saisis dans la zone de faces dirigées vers les côtés par des brins transporteurs (23, 24) du transporteur intermédiaire (20),
c) la distance (1) entre l'axe de roues de renvoi (33, 37) du transporteur de retenue (29) et l'axe de poulies de renvoi (55) des transporteurs sans fin (21, 22) du transporteur intermédiaire (20) correspond à la dimension d'un paquet (10) dans la direction de transport,
d) le transporteur intermédiaire (20) s'étend jusque dans la zone du transporteur d'évacuation (15) de façon telle qu'il puisse amener les paquets (10) au transporteur d'évacuation (15),
e) le transporteur d'évacuation (15) est un transporteur à courroie pourvu d'entraîneurs (26) pour la saisie des paquets (10) déposés sur un brin supérieur (25) de ce transporteur (15).

2. Dispositif selon la revendication 1, caractérisé par le fait que les transporteurs sans fin (21, 22) du transporteur intermédiaire (20) saisissent les paquets (10) dans la zone de faces frontales dirigées vers les côtés (12, 13).

3. Dispositif selon l'une des revendications 1 et 2, caractérisé par le fait que les transporteurs sans fin (21, 22) du transporteur intermédiaire sont constitués de courroies rondes.

4. Dispositif selon la revendication 1 ou l'une des autres revendications, caractérisé par le fait que le transporteur de retenue (29) forme un espace dont la section diminue dans la direction de transport pour la réception des paquets (10), en particulier par convergence des courroies (30, 31) dans la direction de transport, et de préférence, du côté de l'entrée du transporteur de retenue (29), les dimensions ou la hauteur de l'espace entre les courroies (30, 31) sont supérieures à la hauteur des paquets (10), et du côté de la sortie, la distance correspond à peu près à la hauteur des paquets (10).

5. Dispositif selon la revendication 1 ou l'une des autres revendications, caractérisé par le fait que l'entraînement du transporteur intermédiaire (20) et celui du transporteur de retenue (29) sont accordés entre eux de façon telle que le transporteur de retenue (29), à chaque temps machine, libère un paquet (10) et le transporteur intermédiaire (20) ait une vitesse de transport plus que double de celle du transporteur de retenue (29).

6. Dispositif selon la revendication 1 ou l'une des autres revendications, caractérisé par le fait que le transporteur intermédiaire (20) et le transporteur de retenue (29) sont mus par un dispositif d'entraînement commun, en particulier par un servomoteur commun (45) par l'intermédiaire de transmissions (46, 50, 53 ; 38, 40) de rapport différent.

7. Dispositif selon la revendication 1 ou l'une des autres revendications, caractérisé par le fait que le mouvement de transport du transporteur d'évacuation (15), mû de manière autonome, est contrôlé en permanence, en particulier dans la zone d'un rouleau de renvoi (57) de celui-ci dirigé vers le transporteur intermédiaire (20), le contrôle du transporteur d'évacuation (15) saisissant la position relative d'entraîneurs (26) montés sur celui-ci pour les paquets (10) de façon telle qu'un paquet (10) amené au transporteur d'évacuation (15) puisse être saisi immédiatement après par un entraîneur (26) dans la zone d'un brin supérieur (25).

8. Dispositif selon la revendication 7 ou l'une des autres revendications, caractérisé par le fait que, dans la zone du rouleau de renvoi (57) du transporteur d'évacuation (15) dirigé vers le transporteur intermédiaire (20), est placé un organe de mesure pour le détermination de la position du transporteur d'évacuation (15), en particulier un transmetteur de pas angulaires encore appelé trigonomètre (56).

9. Dispositif selon la revendication 1 ou l'une des autres revendications, caractérisé par le fait qu'entre le transporteur de retenue (29) et le transporteur intermédiaire (20) est placé un organe de contrôle des paquets (10), en particulier un capteur (58), de préférence au milieu entre le transporteur de retenue (29) et le transporteur intermédiaire (20), ce capteur (58) contrôlant la position d'un paquet avant (10) à la mise en marche du dispositif.
